# EUROPEAN PATENT SPECIFICATION

(11) **EP 2 241 977 B1**
(45) Date of publication and mention of the grant of the patent: **27.05.2015**
(21) Application number: 09425142.8
(22) Date of filing: 17.04.2009
(51) Int. Cl.: G06F 11/36, G06F 9/445

(54) **Exchangeable application components**
Austauschbare Anwendungskomponenten
Composants d'application échangeables

(43) Date of publication of application: 20.10.2010
(73) Proprietor: Accenture Global Services Limited, Dublin 4 (IE)
(72) Inventor: Montesissa, Marco, 29013 Carpaneto Piacentino (PC) (IT); Salvaneschi, Luca, 27058 Voghera (PV) (IT); Lavorato, Jonny, 20092 Cinisello Balsamo (MI) (IT)
(74) Representative: Müller-Boré & Partner Patentanwälte PartG mbB

(56) References cited:
- EP-A- 1 569 093
- EP-B- 0 648 353
- US-B1- 6 526 567
- US-B1- 6 684 396
- KEVIN JONES: "Employ Sun's JAX-RPC SI toolkit to write a client component for your organization's web services" [Online] 10 December 2004 (2004-12-10), , XP002381584 Retrieved from the Internet: URL:http://www.ftponline.com/javapro/2005_ 01/magazine/features/kj> [retrieved on 2006-05-16] * the whole document *

## Description

### BACKGROUND OF THE INVENTION

### 1. Technical Field.

This application relates to computer hardware and software systems and, in particular, to testing of systems that include application components.

### 2. Related Art.

During integration testing, multiple components of an application are tested together. Each one of the multiple components may be under development by a distinct group of software developers. As software defects are fixed, newer versions of one or more of the components replace prior versions of those components during the testing.

Any version of any of the components may include defects, thereby preventing one or more other components from working. A defect in any component may render the application as a whole unstable or unusable. Therefore, one group of developers may, by introducing a new version of a component, prevent one or more other groups of developers from testing one or more other components.

If a newer version of a component replaces an older version of the component and the application becomes less stable, the older version of the component may be reintroduced. However, reintroducing the older version of the component may be time-consuming. In one example, the entire application may be shut down and then restarted in order to reintroduce the older version. In second example, an instance of the component may be stopped, replaced by the older version of the component, and restarted. The more components that are included in an application, the more time the application may be unavailable when reintroducing older versions of the components. Downtime includes the period of time during which the application is unavailable for testing or the application is unstable enough to effectively prevent testing. When the overall downtime of the application is high, testing activities may be substantially limited.

EP-B-0 648 353 (ERICSSON TELEFON AB L M [SE]), published 15 September 1999 discloses an addressing mechanism for messages with a function name address that embodies a trader or message routing mechanism to enable an interface between software units that can be distributed in a system. This mechanism is also used to direct messages to old and new software units during runtime. In employing this addressing mechanism in the system, the necessary interface specification is created utilizing a specialized object-oriented description language referred to as ELIN.

US 6,526,567 B1 (IBM, 2003) discloses a method for executing a device driver which is used by a number of applications running on a computer system. A first and second version of the device driver are provided, with the first version being optimised and the second version containing debug code for providing trace information. Upon discovering a problem with the device driver, it is possible to selectively switch to the debug version of the code without any of the applications already using the device driver being aware of the switch. Having gathered the necessary trace data, it is then possible to transparently switch back to the optimised version.

### SUMMARY

A method is provided that may limit downtime of an application during integration testing of the application. A redirector is configured to receive first messages transmitted to an address of a component from the application and to forward the first messages to a first instance of the component, where the application includes the component. In response to receiving a clone command, a second instance of the component is generated. The first instance and the second instance concurrently listen for incoming messages. In response to receiving a first switch command, the redirector is reconfigured to forward all second messages received at the address to the second instance of the component instead of to the first instance, where the second messages are received subsequent to the first messages. In response to receiving a second switch command, the redirector is reconfigured to forward all third messages to the first instance instead of to the second instance, where the third messages are received subsequent to the first and second messages.

A system may be provided that includes a memory and a processor, where computer code in the memory is executable with the processor to perform the method provided. A machine readable medium may also be provided that includes instructions which when executed by a data processing system, cause the data processing system to perform the method provided.

Further objects and advantages of the present invention will be apparent from the following description, reference being made to the accompanying drawings wherein preferred embodiments of the present invention are shown.

### BRIEF DESCRIPTION OF THE DRAWINGS

The innovation may be better understood with reference to the following drawings and description. The components in the figures are not necessarily to scale, emphasis instead being placed upon illustrating the principles of the invention. Moreover, in the figures, like-referenced numerals designate corresponding parts throughout the different views.
Figure 1 illustrates a first example of a system to limit downtime during integration testing of an application;
Figure 2 illustrates a second example of a system to limit downtime during integration testing of the application;
Figure 3 illustrates a third example of a system to limit downtime of the application during integration testing;
Figure 4 illustrates an example of a hardware diagram of a processing system that may implement the system to limit downtime of the application;
Figure 5 illustrates an example flow diagram of the logic of the system;
Figure 6 illustrates an example flow diagram of the logic of the cloner; and
Figure 7 illustrates an example flow diagram of the logic of the redirector.

### DETAILED DESCRIPTION

In one example, a business application may include a billing component and a customer relationship management (CRM) component. The application may communicate with the billing component and CRM component using Simple Object Access Protocol (SOAP). To send one of the components a SOAP message, the business application may address the SOAP message to an address corresponding to an instance of the respective one of components. The address of each respective one the components may include a network address and a port number.

A redirector may be inserted between at least one of the components and the rest of the application during integration testing. The application may continue to send messages to the address of the component. The redirector receives the messages at the address and retransmits the message to a selected one of multiple instances of the component. Each one of the multiple instances may be reachable at an alternative address. The redirector may forward the messages to the selected one of the multiple instances using the respective alternative address. The redirector may receive a switch command indicating that the redirector should redirect messages to an identified one of the multiple instances of the component. Because each one of the instances is concurrently listening at a respective one of the alternative addresses, changing the selected one of the instances can be done quickly. In one example, a cloner may also be introduced that creates any one or more of the instances of the component from an identified version of the component. The cloner may be configured to receive a clone command that identifies the instance of the component to create.

A first version of the component may be a stable version. The cloner may receive a command to create a first instance of the component corresponding to the first version of the component. The application may be tested using the first instance of the component, which is the stable version. A second version of the component may be developed. The cloner may be used to create a second instance of component corresponding to the second version while the first instance continues to respond to messages received from the rest of the application. To test the second version, the redirector may receive a first switch command to forward the messages to the second instance of the component instead of the first. If the second version of the component is less stable than the first version, the redirector may receive a second switch command to revert to forwarding the messages to the first instance instead of the second.

It is noted, however, that the redirector and cloner may function regardless of the perceived or measured stability or instability of any particular application component. Application test personnel may use the redirector and cloner to deliberately switch in and out any version of any application component, or even a completely functionally different application component to stand in for an existing component.

One technical advantage of the systems and method described below is that the switch to a new component version as well as the switch back to the previous component version may occur quickly, resulting in minimal downtime of the application during testing. The redirector and the cloner may be removed when integration testing is complete without reconfiguring the rest of the application. The instance of the version of the component to be used after completion of the testing may listen for messages at the same address as the redirector was listening for messages. Thus, another technical advantage of the systems and method described below is that the code paths tested during integration testing are nearly identical to the code paths after testing is complete. Still another technical advantage is that components may be easily tested on different machines. For example, a system test machine, an integration test machine, and a pre-production machine may each include a corresponding instance of the component. If any of the instances is unavailable, any one of the other instances may be quickly selected without reconfiguring the calling systems.

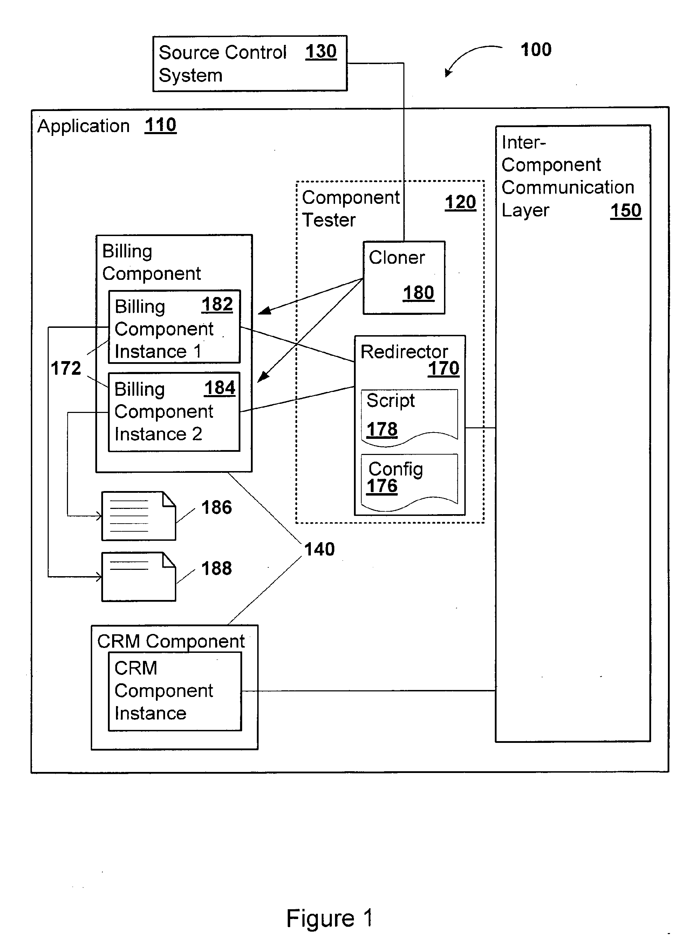

Figure 1 illustrates a first example of a system 100 to limit downtime during integration testing of an application 110. The system 100 may include the application 110 and a component tester 120. The system 100 may include more, fewer, or different elements. For example, the system 100 may also include a source control system 130. In another example, the system may include the application 110 and the application 110 may include the component tester 120.

The application 110 may include any software program that includes one or more components 140 accessed by the rest of the application 110 using remote procedure call messages. Examples of the application 110 include an enterprise resource planning (ERP) program, a customer relationship management (CRM) program, an accounting program, a tax program, an Enterprise Resource Planning program, and an operating system. In one example, the components 140 may include a billing component and a Customer Relationship Management component. In other examples, the application 110 may include more, fewer, or different elements. For example, the application 110 may additionally include an inter-component communication layer 150. The inter-component communication layer 150 may transmit and receive messages to and from the components 140 of the application 110 in the absence of the component tester 120. In one example, the inter-component communication layer 150 may include workflow logic that sends messages to the components 140 in order to execute one or more business processes.

The logic implemented by any component 140 may respond to any type of communication, such as remote procedure calls (RPC). For example, the component may be a web service or any other software program accessible using one or more RPC protocols. An RPC is an inter-process communication technology that facilitates a computer program to transmit a message to cause a programming subroutine identified in the message to execute in another address space, such as on another computer on a shared network. In one example, an RPC message may cause a subroutine to execute on the same computer as the sender of the message. Examples of an RPC protocol include SOAP, Java Remote Method Invocation (RMI), Distributed Component Object Model (DCOM), Common Object Requesting Broker Architecture (CORBA), and Microsoft (TM).NET.

The component tester 120 may be any software module that includes a redirector 170 to test one or more components 140. The redirector 170 routes communication between a source of RPC messages, such as the inter-component communication layer 150, and a selected one of multiple instances 172 of any given component. In one example, the redirector 170 may receive RPC messages sent to an address, and then forward the RPC messages to a selected one of multiple alternate addresses. The redirector 170 may receive responses to the messages transmitted to the selected one of the alternate addresses, and transmit the responses back to a source that originally transmitted the RPC messages to the redirector 170.

The redirector 170 may receive a switch command indicating which one of the multiple instances 172 of the component is the selected one of the multiple instances 172. For example, the redirector 170 may receive commands that control which one of the multiple alternate addresses is the selected one of the multiple alternate addresses. For example, the redirector 170 may receive a switch command indicating which one of the multiple instances 172 of the component should receive messages sent to the component through the communication layer 150. One technical advantage provided by the redirector 170 is that it quickly switches between component instances to support application debugging with minimal downtime. In one example, the redirector 170 may switch from one alternate address to another in less than two seconds after receiving the command to switch addresses. Accordingly, rather than stopping and restarting the instance of the component to be replaced or the entire application in order to replace the component, the innovation instead facilitates on the fly reconfiguration of components for testing.

In one example, the redirector 170 may be implemented using the UNIX rinetd utility, a corresponding configuration file 176, and a shell script 178. The UNIX rinetd utility is an internet redirection server. The configuration file 176 includes redirection entries that indicate on what address or addresses the rinetd utility is to listen and to what address or addresses the rinetd utility is to redirect messages. Table 1 below is an example of the redirection entries of the configuration file 176. The source address indicates on what address the rinetd utitlity is to listen and the destination address indicates to what address the rinetd utility is to redirect messages. The shell script 178, when executed, may stop a currently executing rinetd process, modify the configuration file, and restart the rinetd process. The shell script 178 may modify the redirection entries in the configuration file 176 to direct the rinetd utility to forward messages to a predetermined instance of the component. Receiving the switch command may, for example, include running the shell script 178 to modify the redirection entries in the configuration file 176. In another example, receiving the switch command may include receiving a selection signal from a user input device. The selection signal may be indicative of a user selecting a user interface element to initiate a switch to the predetermined instance of the component.

**Table 1**

| Source Address | | Destination Address | |
|---|---|---|---|
| Source IP | Source Port | Destination IP | Destination Port |
| 172.16.191.243 | 7836 | 172.16.191.243 | 9110 |
| 172.16.191.243 | 7888 | 172.16.191.243 | 9878 |
| 172.16.191.243 | 8836 | 172.16.191.243 | 9111 |
| 172.16.191.243 | 65006 | 172.16.191.243 | 64100 |
| 172.16.191.243 | 7777 | 172.16.191.243 | 8100 |
| 172.16.191.243 | 8888 | 172.16.191.243 | 8891 |

The address may include any information suitable to direct a message to a destination. For example, the address may include a network address, such as an Internet Protocol (IP) address, and a port number.

The component tester 120 may also include the cloner 180 in addition to the redirector 170. The cloner 180 may create an instance of one or more of the components 140 in response to receiving a clone command. The cloner 180 may create the instance based on a software master instance that the cloner 180 obtains from the source control system 130. In another example, the cloner 180 may create the instance directly from the source control system 130. An instance of one of the components 140 is a copy of the component executing in a process and/or thread and that is listening for messages at a configured address. The software master instance may be a directory that includes compiled binaries of the component. For example the directory may include dynamically linked libraries for the billing component.

In one example, the cloner 180 may include a shell script that accepts a parameter indicating an instance to create. For example, the parameter may be a number indicating which of n instances the cloner 180 is to create from the software master instance. In another example, the shell script may accept a string parameter in addition to the number parameter, where the string parameter indicates a source control label from which to obtain the compiled binaries of the component. In an alternative example, the cloner 180 may include multiple shell scripts, where each one of the shell scripts corresponds to the respective one of the instances 172 the shell script creates. If compiled binaries included in the master software instance are replaced, then running the shell script corresponding to one of the existing instances will update the existing instance with the binary files included in the master software instance. In yet another example, the cloner 180 may not include any scripts and instead include computer code written in another programming language. Table 2 below provides an example of a shell script that corresponds to one of the instances 172.

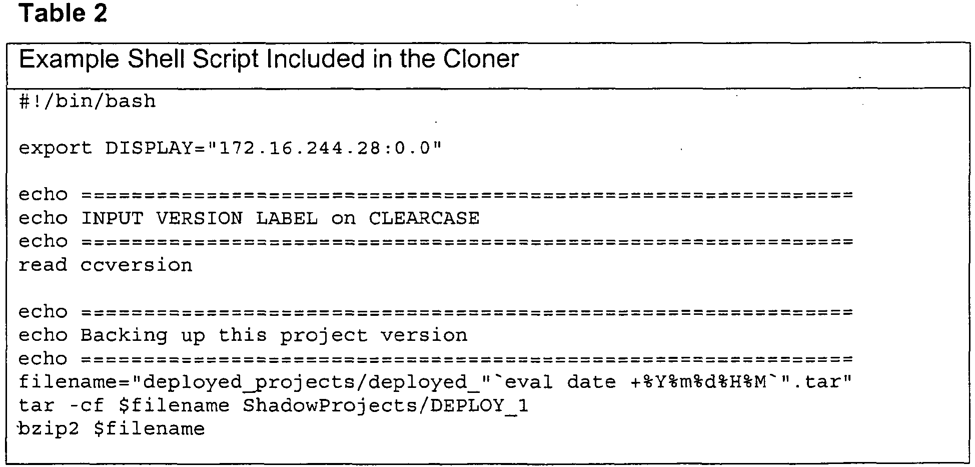

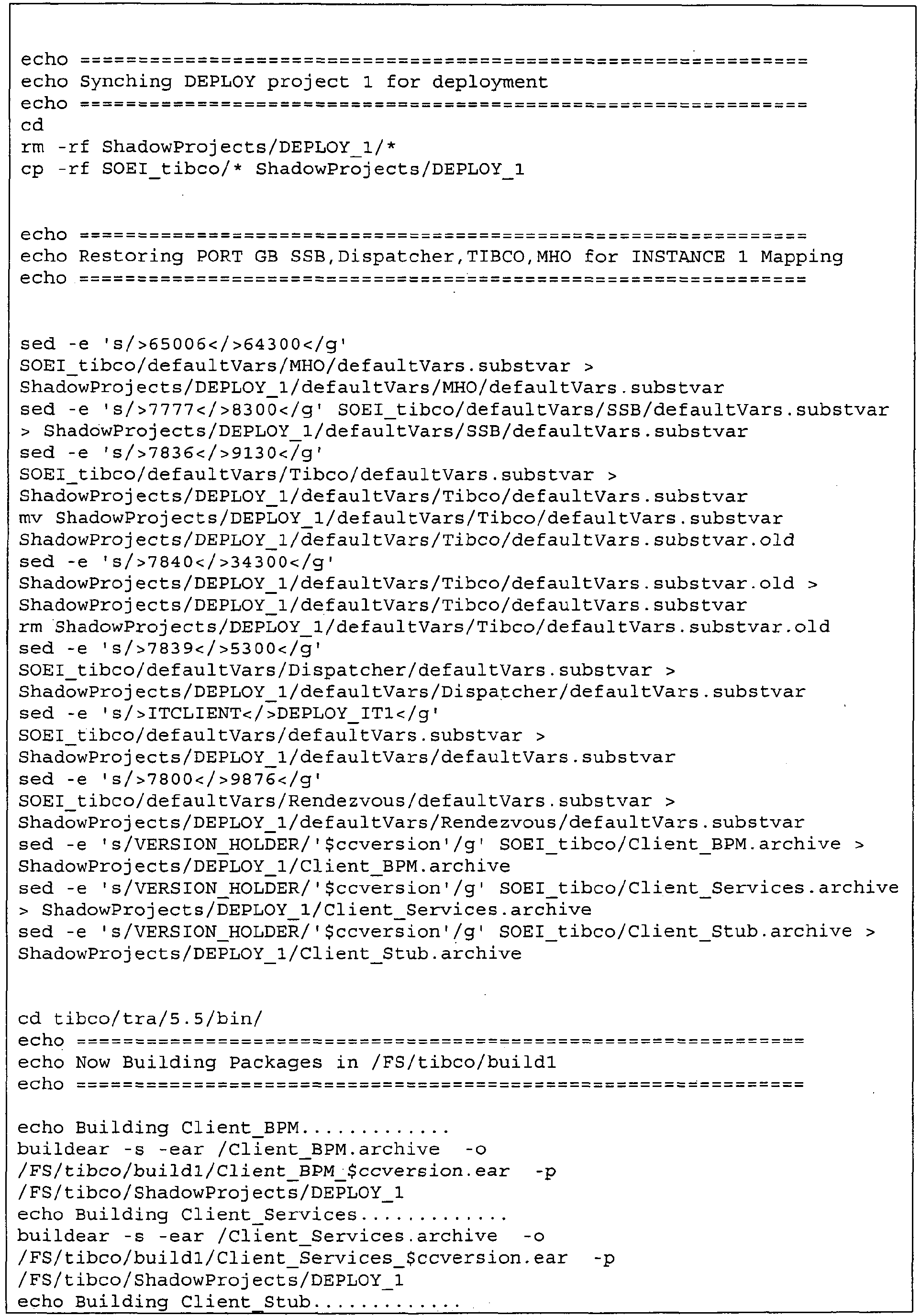

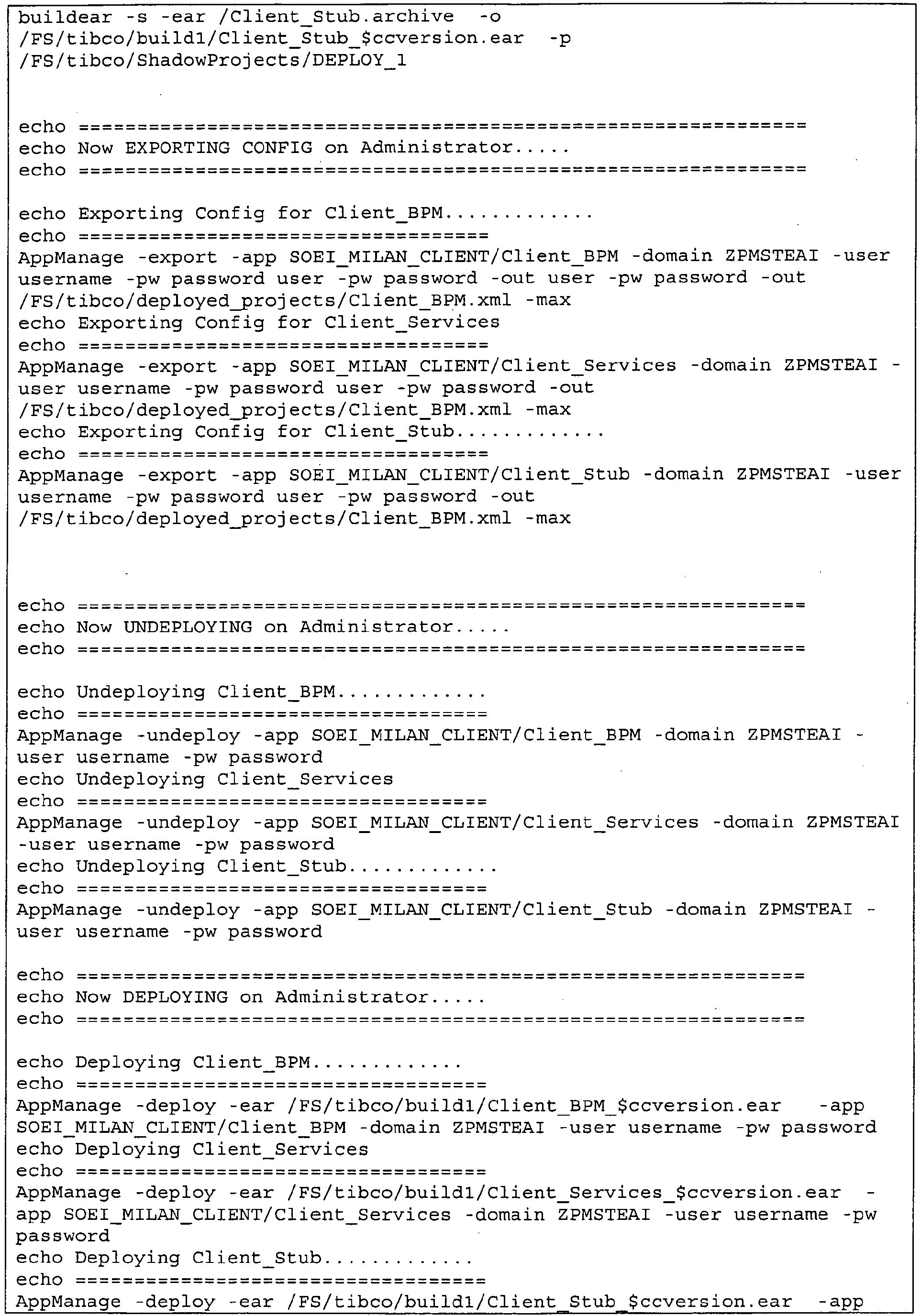

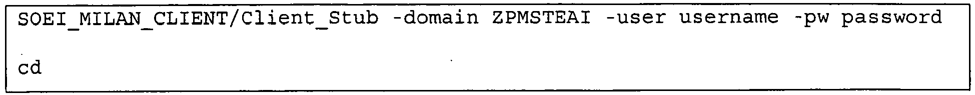

The source control system 130 may be any version control system to manage multiple versions of the same unit of information, such as computer code. One version of the component of the application 110 differs from another version of the component when the functionality, configuration, or both, of the versions differ.

During operation of the system 100 in Figure 1, the component tester 120 may be inserted between the inter-component communication layer 150 and the instances 172 of one of the components 140. For example, the inter-component communication layer 150 may be configured to transmit to a first address all messages directed to a billing component. The redirector 170 in the component tester 120 may be configured to listen at the first address. The redirector 170 may be further configured to route the RPC messages received at the first address to an alternate address of a first instance of the billing component. The first instance of the billing component may be a stable version of the billing component.

During testing, software defects may be identified in the stable version of the billing component, for example. A software programmer may attempt to correct the software defects in the source control system 130. The software programmer may build a test version of the billing component that includes a patch to the software defects. The developer may issue a clone command to the cloner 180 to create a second instance of the billing component that corresponds to the patched test version. The second instance of the billing component may listen for RPC messages at a different alternate address than the alternate address at which the first instance is listening for RPC messages. For example, the alternate address may include a port that is not currently allocated. In one example, the port may be dynamically determined. In another example, the port may be a port chosen by the software programmer. The software programmer may issue a switch command to the redirector 170 in order to switch from forwarding RPC messages to the first instance of the billing component to forwarding the RPC messages to the second instance. The software programmer may at any time issue a switch command to the redirector 170 in order to switch back to forwarding the messages to the first instance. As one example, the software programmer may revert to the prior instance if switching to the second instance of the billing component introduced an undesirable amount of instability into the application 110.

However, the second instance may be used as long as desired, such as until further updates are made, or as long as the second instance is stable. When testing is complete, the component tester 120 may be removed and a single instance of the billing component may listen for messages at the first address. For example, the process in which the redirector 170 runs is killed and the configuration file and scripts are removed. Switching between the instances 172 of the component may be fast and nearly eliminate downtime that would otherwise be incurred by stopping and starting the application 110 or starting and stopping the single instance of component.

Table 3 below provides average measured durations of operations in one example of the system 100 to limit downtime of the application 110.

**Table 3**

| **Operation** | **Duration** |
|---|---|
| Mean time to start a component | 90 sec |
| Mean shutdown time of application | 120 sec |
| Mean Total Restart Time of application | 270 sec |
| Mean cloning instance time | 30 sec |
| Mean dynamic application link change | 0.10 sec |
| Mean sync time (to update one instance) | 5 sec |
| Mean time to switch from one instance to another | 2 sec |
| Mean application restarts per day (overload, cleanup) | 5 |
| Mean failures of one component per day of testing | 3 |
| Mean patches to be applied daily for each component | 2 |
| Mean number of components in application | 8 |

Based on the durations in Table 3, the mean downtime of the application 110 without using the component tester 120 is: (Mean Total Restart Time of application)*{Mean application restarts + [(Mean failures of one component per day of testing + Mean patches to be applied daily for each component) * (Mean number of components in application)]} = (270 sec)*{ 5 + [(3+2)*(8)]}= about 3.3 hours. However, the mean downtime of the application 110 without using the component tester 120 is: (Mean Total Restart Time of application)*(Mean application restarts) + [(Mean time to switch from one instance to another) *(Mean failures of one component per day of testing + Mean patches to be applied daily for each component) * (Mean number of components in application)] = (270 sec)*(5) + [(2 sec)*(3+2)*(8)] = 22 minutes + 80 sec = about 23 minutes. Therefore, the system 100 may substantially limit the downtime of the application 110 during testing.

In another example, different instances of the component may include the same version of the component, but be configured differently. For example, the instances 172 of the component may include a first instance 182 that is in debug mode and a second instance 184 that is in deploy mode. The redirector 170 may receive switch commands to switch back and forth between the two instances 172. Debug mode differs from deploy mode by the extent of logging information generated by the instances 172. Debug mode may have a high logging level relative to deploy mode and produce detailed logging information 186. In contrast, deploy mode may produce little or no logging information 188, but perform better than the debug mode. When investigating a software defect, a switch command may be sent to the redirector 170 to switch to the first instance 182 in debug mode instead of the second instance 184 in deploy mode. When the detailed logging information is no longer desired, another switch command may be sent to the redirector 170 to switch to the second instance 184 in deploy mode.

In one example, when integration testing begins, the first instance 182 in debug mode may be selected because software defects may be encountered frequently during the beginning of testing. Later in the integration testing, the second instance 184 in deploy mode may be selected because software defects may occur less frequently than in the beginning, and because the better performing instance facilitates testing other components. However, should a software defect be encountered later in the testing cycle, the first instance 182 in debug mode may be selected to facilitate isolating the cause of the software defect.

In yet another example, one instance of the component may execute on a different machine than another instance of the component or on a different machine than the rest of the application 110. For example, if one of the instances 172 of the component occasionally consumes substantial processing power due to a software defect, the instance of the component executing on a device different from the rest of the application 110 may be selected by sending a switch command to the redirector 170. In still another example, all of the instances 172 of the component may execute on a different device than the device on which the component tester 120 executes.

In one example implementation of the system 100, the currently selected instance may be determined by examining log files generated by the selected instance. Alternatively or additionally, the currently selected instance may be determined by examining process information. For example, on Unix, the command "ps -ef | grep rinet" may output on a display "tibco 366 28795 0 Mar 14 ? 0:56 /usr/sbin/rinetd --conf-file /FS/tibco/RinetdConfigs/rinetd1.conf." The file "/FS/tibco/RinetdConfigs/rinetd1.conf" may contain configuration information for the first instance 182, and a different configuration file may correspond to the second instance 184. Therefore, the selected instance may be determined to be the first instance 182.

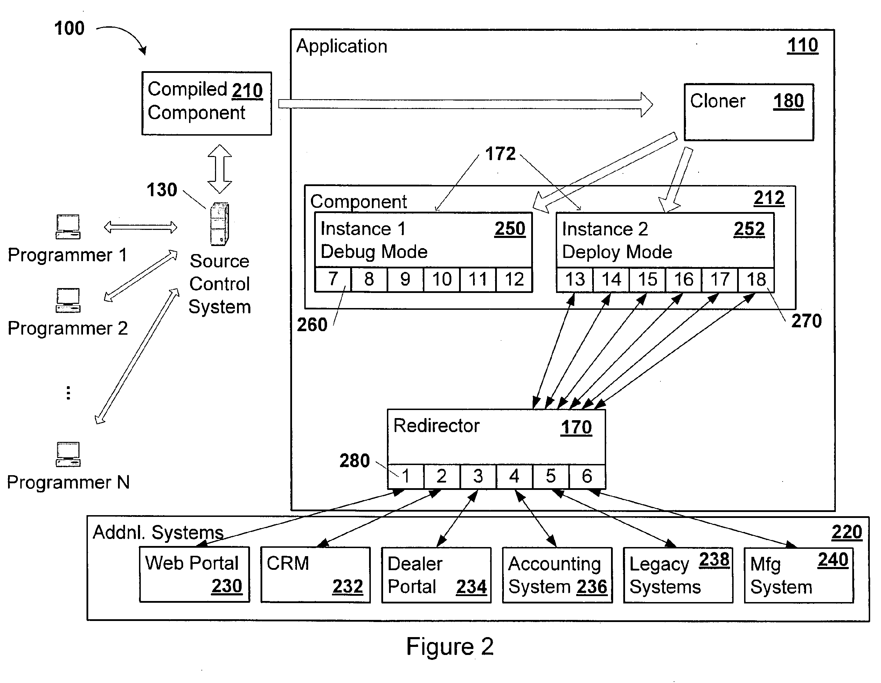

Figure 2 illustrates a second example of the system 100 to limit downtime during integration testing of the application. The system 100 may include the application 110, the source control system 130, and a compiled component 210. The application 110 may include the component 212 corresponding to the compiled component 210, the cloner 180, and the redirector 170. The component 212 may include one or more instances 172 of the component 212. The system 100 may also include additional systems 220 configured to access the component 212. The additional systems 220 may include, for example, a web portal 230, a CRM module 232, a dealer portal 234, an accounting system 236, legacy systems 238, and a manufacturing system 240.

During operation of the system 100, software programmers may make modifications to source code for one of the components 140 using the source control system 130. The compiled component 210 may be generated from the source control system 130 using, for example, a compiler and a linker. The cloner 180 may receive a command to create any one of the instances 172 of the component 212. For example, the cloner 180 may include multiple shell scripts, each corresponding to one of the instances 172. The shell scripts, when executed, may create a first instance 250 from the compiled component 210 that is in debug mode and that is started, listening for messages at predetermined ports 260. For example, the predetermined ports may be the ports 7, 8, 9, 10, 11, and 12 shown in Figure 2. A second one of the shell scripts may create a second instance 252 from the compiled component 210 that is in deploy mode and that is started, listening for messages at different predetermined ports 270. For example the different predetermined ports may be the ports 13, 14, 15, 16, 17, and 18 as shown in Figure 2. In another example, the cloner 218 may include N number of scripts corresponding to N different instances 172 of the component 212 instead of just two scripts and two instances. In yet another example, the cloner 180 may include a shell script that receives one or more parameters to identify an instance to create and parameters to control configuration of the identified instance. For example, the parameters may indicate whether the instance should be in debug mode or deploy mode, what ports 260 and 270 the instance should listen on, or any other parameter to control the configuration of the instance. The cloner 180 executes in a process or thread that listens for commands and creates one or more of the instances 172 in response to receiving the commands.

The redirector 170 may listen for messages received from one or more of the additional systems 220 over the network interface 242. The redirector 170 may listen for messages at pre-determined ports 280 such as the ports 1, 2, 3, 4, 5, and 6 as shown in Figure 2. In one example, the redirector 170 may receive the switch command to route messages to the selected one of the instances 172 of the component 212. Thereafter, the redirector 170 may route messages received on any one of the ports 280 to a corresponding port among the ports 260 or 270 of the selected one of the instances 172. For example, in Figure 2, messages received at the ports 280 of the redirector 170 are forwarded to the determined ports 270 of the second instance 252 of the component 212. For example, a message received at port 1 of the redirector 170 may be forwarded to port 13 of the second instance 252 and a message received at port 6 of the redirector 170 may be forwarded to port 18 of the second instance 252.

If the redirector 170 receives the switch command to switch the selected instance from the second instance 252 to the first instance 250 of the component 212, the redirector 170 may thereafter forward messages received on any one of the ports 280 of the redirector 170 to a corresponding port included in the determined ports 260 of the first instance 250. For example, a message received at port 1 of the redirector 170 may be forwarded to port 7 of the first instance 250.

Alternatively or in addition, the redirector 170 may be configured to forward any message received at one of the ports 280 of the redirector 170 to an identified port of an identified instance. For example, prior to such a configuration, the redirector 170 may be configured to route all messages received on the ports 280 of the redirector 170 to the corresponding ports 270 of the second instance 252 of the component 212, which may be in deploy mode. The redirector 170 may then be configured to route messages received on one of the ports 280 to one of the ports 260 of the first instance 250 of the component 212, which may be in debug mode. Forwarding the message to different instances of the component 212 depending on which one of the ports the message was received on, facilitates detailed logging when processing messages received from a determined one of the additional systems 220, while processing messages received from the other additional systems 220 with a better performing or more stable instance of the component 212.

The system 100 to limit downtime of the application 110 may be useful beyond just integration testing. For example, the system 100 may be used to test patches applied to a production version of the application 110.

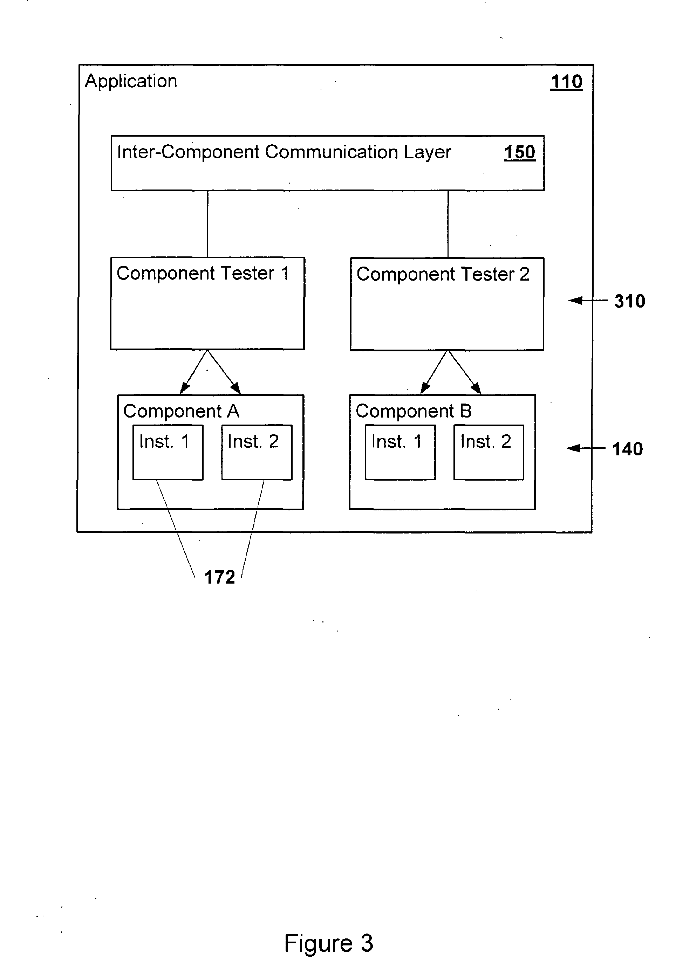

Figure 3 illustrates a third example of the system 100 to limit downtime of the application 110 during integration testing. In the example illustrated in Figure 3, the application 110 may include the multiple component testers 310, the components 140, and the inter-component communication layer 150. The multiple component testers 310 are individually designated Component Tester 1 and Component Tester 2. The components 140 are individually designated Component A and Component B. Each one of the multiple component testers 310 corresponds to one of the components 140. For example, Component Tester 1 corresponds to Component A. Each one of the multiple component testers 310 receives messages from the inter-component communication layer 150 addressed to the corresponding one of the components 140. Each one of the multiple component testers 310 is configured to forward messages received for the corresponding one of the components 140 to a respective selected one of the instances 172 of the component. For example, the component tester 120 designated Component Tester 1 in Figure 3 may forward the messages addressed to the component designated Component A to a selected one of the instances 172 of Component A. Switch commands may be sent to a respective one of the component testers 310 to switch the selected one of the instances 172 for the corresponding one of the components 140. Similarly, clone commands may be sent to a respective one of the component testers 310 to create one of the instances 172 for the corresponding one of the components 140.

In an alternate example, one component tester 120 may handle switching for multiple components 140 instead of for just one component. For example, the component tester 120 may listen for messages addressed to any one of two or more components 140. The redirector 170 may include the configuration file 176 corresponding to each respective one of the components 140 that determines the forwarding rules for messages received for each respective one of the components 140. The redirector 170 may receive a message addressed to the source address of the one of the components 140. The redirector 170 may determine the destination address based on the source address, and forward the message to the destination address. The redirector 170 may receive switch commands that includes a component identifier and an instance identifier. The component identifier may indicate which one of the components 140 is to be reconfigured. The instance identifier may indicate to which of the instances 172 of the component the redirector 170 is to forward messages. Clone commands may also include the component identifier and the instance identifier, where the component identifier indicates which of the components 140 is to have a new instance and the instance identifier identifies the instance to create.

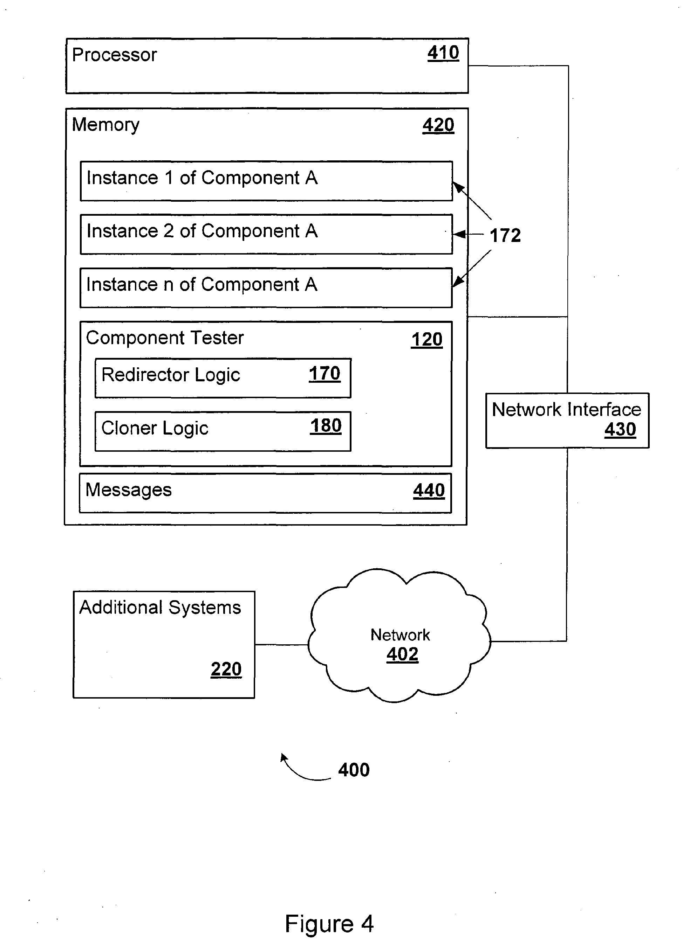

Figure 4 illustrates an example of a hardware diagram of a processing system 400 and supporting entities, such as a network 402 and the additional systems 220, that may implement the system 100 to limit downtime of the application 110. The processing system 400 includes a processor 410, memory 420, and a network interface 430. The memory 420 holds the programs and processes that implement the logic described above for execution by the processor 410. As examples, the memory 420 may store program logic that implements the component tester 120, the instances 172 of one or more of the components 140, or any other part of the application 110. The system 400 may receive messages 440, such as the RPC messages over the network interface 430 from the additional systems 220 in communication with the network interface 430 over the network 402.

The systems 100 and 400 may be implemented in many different ways. For example, although some features are shown stored in computer-readable memories (e.g., as logic implemented as computer-executable instructions or as data structures in memory), all or part of the system and its logic and data structures may be stored on, distributed across, or read from other machine-readable media. The media may include hard disks, floppy disks, CD-ROMs, a signal, such as a signal received from a network or received over multiple packets communicated across the network.

The systems 100 and 400 may be implemented with additional, different, or fewer entities. As one example, the processor 410 may be implemented as a microprocessor, a microcontroller, a DSP, an application specific integrated circuit (ASIC), discrete logic, or a combination of other types of circuits or logic. As another example, the memory 420 may be a non-volatile and/or volatile memory, such as a random access memory (RAM), a read-only memory (ROM), an erasable programmable read-only memory (EPROM), flash memory, any other type of memory now known or later discovered, or any combination thereof. The memory 420 may include an optical, magnetic (hard-drive) or any other form of data storage device.

The processing capability of the systems 100 and 400 may be distributed among multiple entities, such as among multiple processors and memories, optionally including multiple distributed processing systems. Parameters, databases, and other data structures may be separately stored and managed, may be incorporated into a single memory or database, may be logically and physically organized in many different ways, and may implemented with different types of data structures such as linked lists, hash tables, or implicit storage mechanisms. Logic, such as programs or circuitry, may be combined or split among multiple programs, distributed across several memories and processors, and may be implemented in a library, such as a shared library (e.g., a dynamic link library (DLL)). The DLL, for example, may store code that prepares intermediate mappings or implements a search on the mappings. As another example, the DLL may itself provide all or some of the functionality of the system, tool, or both.

The processor 410 may be in communication with the memory 420 and the network interface 430. In one example, the processor 410 may also be in communication with additional elements, such as a display. The processor 410 may be a general processor, central processing unit, server, application specific integrated circuit (ASIC), digital signal processor, field programmable gate array (FPGA), digital circuit, analog circuit, or combinations thereof.

The processor 410 may be one or more devices operable to execute computer executable instructions or computer code embodied in the memory 420 or in other memory to perform the features of the component tester 120. The computer code may include instructions executable with the processor 410. The computer code may include embedded logic. The computer code may be written in any computer language now known or later discovered, such as C++, C#, Java, Pascal, Visual Basic, Perl, HyperText Markup Language (HTML), JavaScript, assembly language, shell script, or any combination thereof. The computer code may include source code and/or compiled code.

The network interface 430 may include hardware, software, or a combination of hardware and software that facilitates communication of the application 110 over the network 402. The network interface 430 provides physical access to a network and may provide a low-level addressing system through the use of Media Access Control (MAC) addresses.

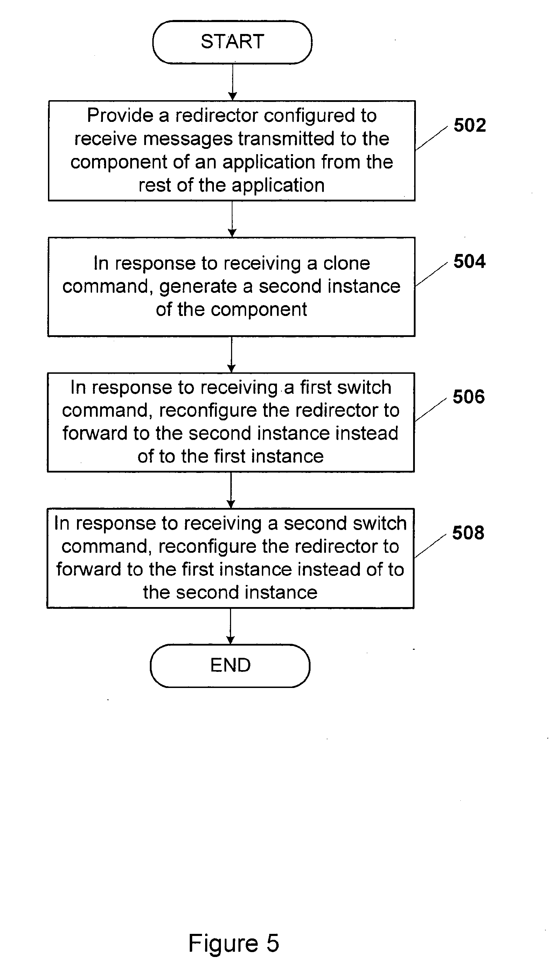

Figure 5 illustrates an example flow diagram of the logic of the system 100. The logic may include additional, different, or fewer operations. The operations may be executed in a different order than illustrated in Figure 5.

The redirector 170 is provided that is configured to receive messages transmitted to an address of the component 212 included in the application (502). The redirector 170 receives the messages from the rest of the application 110. The redirector 170 forwards the messages to a first instance 250 of the component 212.

When instructed, the cloner 180 generates a second instance of the component (504). The first instance 250 and the second instance 252 may be concurrently listening for incoming messages after generating the second instance 252. However, each instance may be configured to listen on different addresses.

When instructed, the redirector 170 modifies the configuration file 176 to reconfigure the redirector 170 to forward messages received at the address to the second instance of the component instead of to the first instance (506).

When instructed, the redirector 170 modifies the configuration file 176 to reconfigure the redirector 170 to forward messages received at the address to the first instance instead of to the second instance (508).

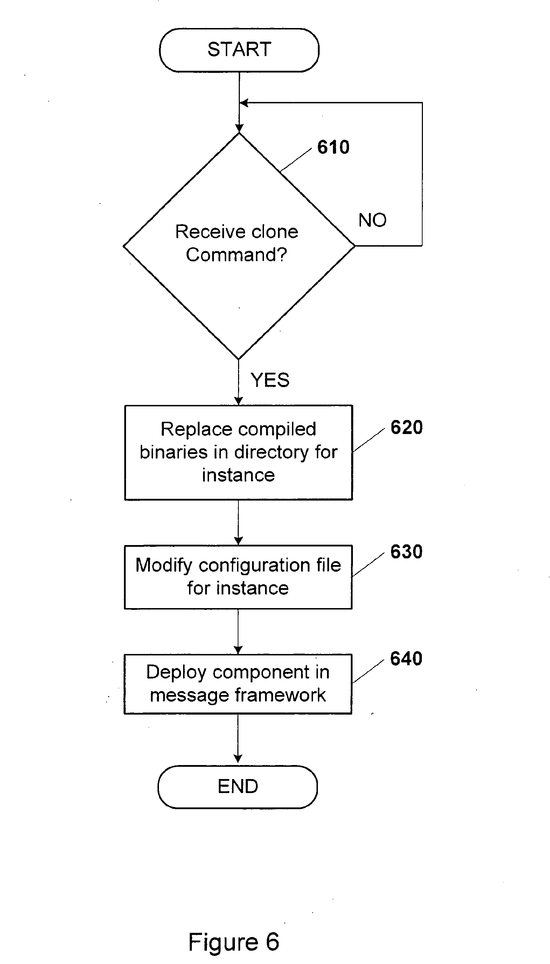

Figure 6 illustrates an example flow diagram of the logic of the cloner 180. The logic may include additional, different, or fewer operations. The operations may be executed in a different order than illustrated in Figure 6.

The cloner 180 may check to see if the clone command is received (610). If no clone command is received, the cloner 180 may repeat until the clone command is received. Alternatively, the cloner 180 may be one or more shell scripts and the clone command is received when one or more of the scripts is executed.

When the cloner command is received, the cloner 180 may replace or add compiled binaries to a directory corresponding to the instance to clone (620). The compiled binaries may be included in the complied component 210 generated from the source control system 130.

When the cloner command is received, the cloner 180 may additionally setup the configuration files for the instance of the component (630). In one example, the cloner 180 may additionally modify the configuration file 176 included in the redirector 170 so that if the redirector processor were restarted, the redirector 170 would read switch to the instance cloned.

When the cloner command is received, the cloner 180 may also deploy the component in a message framework (640). The message framework may be any framework to support sending and receiving messages to and from components using RPC. For example, the message framework may include a SOAP framework, such as .NET, TIBCO (TM), or Apache Axis.

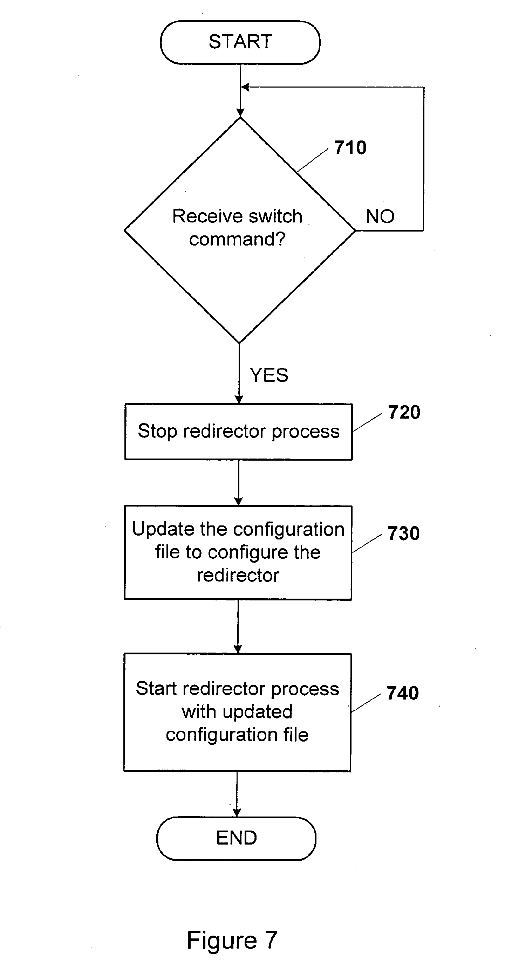

Figure 7 illustrates an example flow diagram of the logic of the redirector 170. The logic may include additional, different, or fewer operations. The operations may be executed in a different order than illustrated in Figure 7.

The redirector 170 may check to see if a switch command is received (710). If no switch command is received, the operation may continue to check to see if a switch command is received (710). Alternatively the redirector 170 may be one or more shell scripts and the switch command is received when one or more of the scripts is executed.

When the switch command is received, the redirector 170 may stop the redirector process (720). In one example, the redirector 170 may further update the configuration file 176 to configure the redirector 170 to forward messages to the instance (730). In a second example, the cloner 180 may update the configuration file 176 is used to determiner which of the instance should receive the incoming messages for the component.

In one example the system includes a memory 420 and a processor 410. The processor 410 is in communication with the memory 420. The memory includes computer code, which, when executed with the processor, causes the system to provide the redirector 170 configured to receive from the application 110 first messages addressed to an address of the component. The application 110 includes the component. The redirector is also configured to forward the first messages to a first instance of the component. The computer code, when executed, receives a clone command and generates a second instance of the component in response to receipt of the clone command. The first instance and the second instance are configured to concurrently listen for incoming messages.

The computer code, when executed, receives a first switch command and, in response to receipt of the first switch command, reconfigures the redirector to forward all second messages that are received at the address to the second instance of the component instead of to the first instance. The second messages are received subsequent to the first messages.

The computer code, when executed, receives a second switch command and, in response to receipt of the second switch command, reconfigures the redirector to forward all third messages to the first instance instead of to the second instance. The third messages are received subsequent to the first messages and the second messages.

The second instance includes a different version of the component than the first instance. In addition, the second instance of the component is configured to have a different logging level than the first instance of the component.

In one example, the system 100 also includes the network 402 and a computer, where the processor is in communication with the computer over the network. The second instance of the component may be configured to execute on the computer.

The first messages, the second messages, and the third messages may include Simple Object Access Protocol (SOAP) messages.

The computer code, when executed, may further cause the system to modify redirection entries in the configuration file of the redirector in response to receipt of the first switch command.

The first instance of the component may be configured to listen for incoming remote procedure call messages at a second address different from the address of the component. The redirector may be configured to forward the first messages to the first instance of the component at the second address.

In one example, a computer-readable medium may be encoded with computer executable instructions. The computer executable instructions may be executable with the processor.

The computer-readable medium includes instructions executable to provide the redirector 170 configured to receive, from the application 101, first messages addressed to an address of the component and to forward the first messages to a first instance of the component. The application 110 includes the component.

The computer-readable medium also includes instructions executable to receive a clone command and to generate a second instance of the component in response to receipt of the clone command. The first instance and the second instance are configured to concurrently listen for incoming messages.

The computer-readable medium also includes instructions executable to receive a first switch command to reconfigure the redirector, in response to receipt of the first switch command, to forward all second messages that are received at the address to the second instance of the component instead of to the first instance. The second messages are received subsequent to the first messages.

The computer-readable medium also includes instructions executable to receive a second switch command and to reconfigure the redirector, in response to receipt of the second switch command, to forward all third messages that are received at the address to the first instance instead of to the second instance. The third messages are received subsequent to the first messages and the second messages.

The instructions executable to generate the second instance of the component are further executable to generate the second instance from a different version of the component than the first instance. The instructions executable to generate the second instance of the component are further executable to configure the second instance of the component to have a different logging level than the first instance of the component.

The first messages, the second messages, and third messages may include Simple Object Access Protocol (SOAP) messages. The address may be a first address, where the first instance of the component is configured to listen for incoming remote procedure call messages at a second address. The redirector may be configured to forward the first messages to the first instance of the component at the second address.

In one example, the first address includes multiple ports. For example the first address may include one port in one message and a different port in another.

All of the discussion, regardless of the particular implementation described, is exemplary in nature, rather than limiting. For example, although selected aspects, features, or components of the implementations are depicted as being stored in memories, all or part of systems and methods consistent with the innovations may be stored on, distributed across, or read from other computer-readable media, for example, secondary storage devices such as hard disks, floppy disks, and CD-ROMs; a signal received from a network; or other forms of ROM or RAM either currently known or later developed. Moreover, the various modules and screen display functionality is but one example of such functionality and any other configurations encompassing similar functionality are possible.

Furthermore, although specific components of innovations were described, methods, systems, and articles of manufacture consistent with the innovation may include additional or different components. For example, a processor may be implemented as a microprocessor, microcontroller, application specific integrated circuit (ASIC), discrete logic, or a combination of other type of circuits or logic. Similarly, memories may be DRAM, SRAM, Flash or any other type of memory. Flags, data, databases, tables, entities, and other data structures may be separately stored and managed, may be incorporated into a single memory or database, may be distributed, or may be logically and physically organized in many different ways. Programs may be parts of a single program, separate programs, or distributed across several memories and processors.

The respective logic, software or instructions for implementing the processes, methods and/or techniques discussed above may be provided on computer-readable media or memories or other tangible media, such as a cache, buffer, RAM, removable media, hard drive, other computer readable storage media, or any other tangible media or any combination thereof. The tangible media include various types of volatile and nonvolatile storage media. The functions, acts or tasks illustrated in the figures or described herein may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like. In one embodiment, the instructions are stored on a removable media device for reading by local or remote systems. In other embodiments, the logic or instructions are stored in a remote location for transfer through a computer network or over telephone lines. In yet other embodiments, the logic or instructions are stored within a given computer, central processing unit ("CPU"), graphics processing unit ("GPU"), or system.

While various embodiments of the innovation have been described, it will be apparent to those of ordinary skill in the art that many more embodiments and implementations are possible within the scope of the innovation. Accordingly, the innovation is not to be restricted except in light of the attached claims and their equivalents.

## Claims

1. A computer-implemented method to limit downtime of an application during integration testing of the application, the method comprising:
providing (502) a redirector (170) configured to receive first messages transmitted to a first address of a component from the application (110) and to forward the first messages to a first instance (182) of the component, the redirector (170) having a corresponding configuration file (176), the configuration file including redirection entries that indicate on what address the redirector (170) is to listen and to what address the redirector (170) is to redirect messages, the application (110) including the component (140);
forwarding the first messages to a second address, the first instance (182) of the component listening for incoming remote procedure call messages at the second address, wherein each of the instances is configured to listen on a different address, and wherein the first address and the second address each include an IP address and a port number;
in response to receiving a clone command, generating (504) a second instance (184) of the component from a different version of the component (140) than the first instance (182), the first instance (182) and the second instance (184) concurrently listening for incoming messages and the second instance (184) of the component having a different logging level than the first instance (182) of the component;
in response to receiving a first switch command, reconfiguring (506) the redirector (170) by:
- stopping the redirector (170);
- updating the configuration file (176) to reconfigure the redirector (170) to forward all second messages received at the first address to the second instance (184) of the component instead of to the first instance (182), the second messages received subsequent to the first messages to determine that the second instance (184) should receive the incoming messages for the component;
in response to receiving a second switch command, reconfiguring (508) the redirector (170) by:
- stopping the redirector (170);
- updating the configuration file (176) to reconfigure the redirector (170) to forward all third messages to the first instance (182) instead of to the second instance (184), the third messages received subsequent to the first and second messages,
- starting the redirector (170) so that the configuration file (176) is used to determine that the first instance should receive the incoming messages for the component; and
wherein the redirector (170) runs in a process, the method further comprising killing the process in which the redirector (170) runs when integration testing of the application is complete.

2. The method of claim 1, further comprising all of the application other than the component (150) communicating with the component (140) via remote procedure call messages.

3. The method of claim 1 or 2, wherein listening for incoming messages comprises listening for incoming Simple Object Access Protocol (SOAP) messages.

4. The method of any of claims 1 to 3, further comprising modifying (630) redirection entries in the configuration file (176) of the redirector in response to receiving the first switch command.

5. The method of any of claims 1 to 4, wherein the clone command is a first clone command, the method further comprising generating a third instance of the component in response to receiving a second clone command, wherein the first instance (182), the second instance (184), and the third instance concurrently listen for incoming messages.

6. The method of any of claims 1 to 5, further comprising executing the second instance (184) on a different device than a device on which the first instance executes.

7. The method of any one of the preceding claims, further comprising, in response to receiving a third switch command, reconfiguring the redirector (170) to forward all fourth messages addressed to the first address to the first instance and to forward all fifth messages addressed to the second address to the second instance (184), wherein the fourth messages are subsequent to the first, second, and third messages, and wherein the fifth messages are subsequent to the first, second, third, and fourth messages.

8. The method of any of claims 1 to 7, wherein the first address comprises multiple ports.

9. The method of any of claims 1 to 8, further comprising:
reconfiguring the redirector (170) to stop receiving any messages at the first address in response to completion of the integration testing of the application (110); and
reconfiguring the first instance (182) of the component to listen at the first address in response to completion of the integration testing of the application (110).

10. A system (400) comprising:
a memory (420); and
a processor (410) in communication with the memory (420), the memory (420) comprising computer code which when executed with the processor (410) causes the system (400) to perform the method of any of claims 1 to 8.

11. A machine readable medium including instructions which when executed by a data processing system (400), cause the data processing system (400) to perform the method of any of claims 1 to 8.

## Patentansprüche

1. Computerimplementiertes Verfahren zum Begrenzen einer Stillstandszeit einer Anwendung während einer Integrationsprüfung der Anwendung, wobei das Verfahren umfasst:
Bereitstellen (502) einer Umleiteinrichtung bzw. eines Redirector (170), die bzw. der konfiguriert ist, erste Nachrichten zu empfangen, die an eine erste Adresse einer Komponente von der Anwendung (110) gesendet werden, und die ersten Nachrichten an eine erste Instanz (182) der Komponente weiterzuleiten, wobei der Redirector (170) eine entsprechende Konfigurationsdatei (176) aufweist, wobei die Konfigurationsdatei Umleiteinträge enthält, die angeben, auf welcher Adresse der Redirector (170) horchen soll und an welche Adresse der Redirector (170) die Nachrichten umleiten soll, wobei die Anwendung (110) die Komponente (140) enthält;
Weiterleiten der ersten Nachrichten an eine zweite Adresse, wobei die erste Instanz (182) der Komponente nach eingehenden Remote Procedure Call-Nachrichten an der zweiten Adresse horcht, wobei jede der Instanzen konfiguriert ist, auf einer unterschiedlichen Adresse zu horchen, und wobei die erste Adresse und die zweite Adresse jeweils eine IP-Adresse und eine Port-Nummer enthalten;
ansprechend auf das Empfangen eines Klon-Befehls, Generieren (504) einer zweiten Instanz (184) der Komponente aus einer anderen Version der Komponente (140) als der ersten Instanz (182), wobei die erste Instanz (182) und die zweite Instanz (184) gleichzeitig nach eingehenden Nachrichten horchen und die zweite Instanz (184) der Komponente einen anderen Logging- bzw. Protokollierungs-Level als die erste Instanz (182) der Komponente aufweist;
ansprechend auf das Empfangen eines ersten Umschalt-Befehls, Rekonfigurieren (506) des Redirector (170) durch:
- Stoppen des Redirector (170);
- Aktualisieren der Konfigurationsdatei (176), um den Redirector (170) dahingehend zu rekonfigurieren, alle zweiten Nachrichten, die an der ersten Adresse empfangen werden, an die zweite Instanz (184) der Komponente anstatt an die erste Instanz (182) weiterzuleiten, wobei die zweiten Nachrichten nach den ersten Nachrichten empfangen werden,
um zu bestimmen, dass die zweite Instanz (184) die eingehenden Nachrichten für die Komponente empfangen soll;
ansprechend auf das Empfangen eines zweiten Umschalt-Befehls, Rekonfigurieren (508) des Redirector (170) durch:
- Stoppen des Redirector (170);
- Aktualisieren der Konfigurationsdatei (176), um den Redirector (170) dahingehend zu rekonfigurieren, alle dritten Nachrichten an die erste Instanz (182) anstatt an die zweite Instanz (184) weiterzuleiten, wobei die dritten Nachrichten nach den ersten und den zweiten Nachrichten empfangen werden,
- Starten des Redirector (170), so dass die Konfigurationsdatei (176) zum Bestimmen verwendet wird, dass die erste Instanz die eingehenden Nachrichten für die Komponente empfangen soll; und
wobei der Redirector (170) in einem Prozess läuft, wobei das Verfahren ferner das Killen bzw. Stoppen des Prozesses umfasst, in dem der Redirector (170) läuft, wenn die Integrationsprüfung der Anwendung abgeschlossen ist.

2. Verfahren nach Anspruch 1, ferner umfassend, dass die gesamte Anwendung außer der Komponente (150) mit der Komponente (140) über Remote Procedure Call-Nachrichten kommuniziert.

3. Verfahren nach Anspruch 1 oder 2, wobei das Horchen nach eingehenden Nachrichten das Horchen nach eingehenden Simple Object Access Protocol (SOAP)-Nachrichten umfasst.

4. Verfahren nach einem der Ansprüche 1 bis 3, ferner umfassend das Modifizieren (630) von Umleiteinträgen in der Konfigurationsdatei (176) des Redirector ansprechend auf das Empfangen des ersten Umschalt-Befehls.

5. Verfahren nach einem der Ansprüche 1 bis 4, wobei der Klon-Befehel ein erster Klon-Befehl ist, wobei das Verfahren ferner das Generieren einer dritten Instanz der Komponente ansprechend auf das Empfangen eines zweiten Klon-Befehels umfasst, wobei die erste Instanz (182), die zweite Instanz (184) und die dritte Instanz gleichzeitig nach eingehenden Nachrichten horchen.

6. Verfahren nach einem der Ansprüche 1 bis 5, ferner umfassend das Ausführen der zweiten Instanz (184) auf einer anderen Vorrichtung als einer Vorrichtung, auf der die erste Instanz ausführt.

7. Verfahren nach einem der vorhergehenden Ansprüche, ferner umfassend, ansprechend auf das Empfangen eines dritten Umschalt-Befehls, Rekonfigurieren des Redirector (170) dahingehend, alle vierten Nachrichten, die an die erste Adresse adressiert sind, an die erste Instanz weiterzuleiten und alle fünften Nachrichten, die an die zweite Adresse adressiert sind, an die zweite Instanz (184) weiterzuleiten, wobei die vierten Nachrichten nach den ersten, zweiten und dritten Nachrichten sind, und wobei die fünften Nachrichten nach den ersten, zweiten, dritten und vierten Nachrichten sind.

8. Verfahren nach einem der Ansprüche 1 bis 7, wobei die erste Adresse mehrere Ports umfasst.

9. Verfahren nach einem der Ansprüche 1 bis 8, ferner umfassend:
Rekonfigurieren des Redirector (170) dahingehend, das Empfangen von Nachrichten an der ersten Adresse ansprechend auf das Abschließen der Integrationsprüfung der Anwendung (110) zu stoppen; und
Rekonfigurieren der ersten Instanz (182) der Komponente dahingehend, an der ersten Adresse ansprechend auf das Abschließen der Integrationsprüfung der Anwendung (110) zu horchen.

10. System (400), umfassend:
einen Speicher (420); und
einen Prozessor (410) in Kommunikation mit dem Speicher (420), wobei der Speicher (420) Computercode umfasst, der, wenn mit dem Prozessor (410) ausgeführt, das System (400) veranlasst, das Verfahren nach einem der Ansprüche 1 bis 8 durchzuführen.

11. Maschinenlesbares Medium, enthaltend Instruktionen, die, wenn von einem Datenverarbeitungssystem (400) ausgeführt, das Datenverarbeitungssystem (400) veranlassen, das Verfahren nach einem der Ansprüche 1 bis 8 durchzuführen.

## Revendications

1. Procédé mis en oeuvre par ordinateur pour limiter le temps d'arrêt d'une application au cours du test d'intégration de l'application, le procédé comprenant :
fournir (502) un redirecteur (170) configuré pour recevoir des premiers messages transmis à une première adresse d'un composant de l'application (110) et pour transférer les premiers messages à une première instance (182) du composant, le redirecteur (170) ayant un fichier de configuration correspondant (176), le fichier de configuration incluant des entrées de redirection qui indiquent sur quelle adresse le redirecteur (170) doit être en mode réception et à quelle adresse le redirecteur (170) doit rediriger des messages, l'application (110) incluant le composant (140) ;
transférer les premiers messages à une seconde adresse, la première instance (182) du composant étant en mode réception pour des messages d'appel de procédure à distance entrants au niveau de la seconde adresse, dans lequel chacune des instances est configurée pour être en mode réception sur une adresse différente, et dans lequel la première adresse et la seconde adresse incluent chacune une adresse IP et un numéro de port ;
en réponse à la réception d'une commande de clone, générer (504) une deuxième instance (184) du composant à partir d'une version différente du composant (140) de la première instance (182), la première instance (182) et la deuxième instance (184) étant en mode réception de manière concomitante pour des messages entrants et la deuxième instance (184) du composant ayant un niveau de journalisation différent de la première instance (182) du composant ;
en réponse à la réception d'une première commande de commutation, reconfigurer (506) le redirecteur (170) en :
- arrêtant le redirecteur (170) ;
- mettant à jour le fichier de configuration (176) pour reconfigurer le redirecteur (170) afin de transférer tous les deuxièmes messages reçus au niveau de la première adresse à la deuxième instance (184) du composant au lieu de la première instance (182), les deuxièmes messages étant reçus à la suite des premiers messages,
afin de déterminer que la deuxième instance (184) doit recevoir les messages entrants pour le composant ;
en réponse à la réception d'une deuxième commande de commutation, reconfigurer (508) le redirecteur (170) en :
- arrêtant le redirecteur (170) ;
- mettant à jour le fichier de configuration (176) pour reconfigurer le redirecteur (170) afin de transférer tous les troisièmes messages à la première instance (182) au lieu de la deuxième instance (184), les troisièmes messages étant reçus à la suite des premiers et deuxièmes messages,
- démarrer le redirecteur (170) de sorte que le fichier de configuration (176) est utilisé pour déterminer que la première instance doit recevoir les messages entrants pour le composant ; et
dans lequel le redirecteur (170) s'exécute dans un processus, le procédé comprenant en outre mettre fin au processus dans lequel le redirecteur (170) s'exécute lorsque le test d'intégration de l'application s'est achevé.

2. Procédé selon la revendication 1, comprenant en outre l'ensemble de l'application autre que le composant (150) communiquant avec le composant (140) par le biais de messages d'appel de procédure à distance.

3. Procédé selon la revendication 1 ou 2, dans lequel être en mode réception pour des messages entrants comprend être en mode réception pour des messages de protocole SOAP entrants.

4. Procédé selon l'une quelconque des revendications 1 à 3, comprenant en outre modifier (630) des entrées de redirection dans le fichier de configuration (176) du redirecteur en réponse à la réception de la première commande de commutation.

5. Procédé selon l'une quelconque des revendications 1 à 4, dans lequel la commande de clone est une première commande de clone, le procédé comprenant en outre générer une troisième instance du composant en réponse à la réception d'une deuxième commande de clone, dans lequel la première instance (182), la deuxième instance (184) et la troisième instance sont en mode réception de manière concomitante pour des messages entrants.

6. Procédé selon l'une quelconque des revendications 1 à 5, comprenant en outre exécuter la deuxième instance (184) sur un dispositif différent d'un dispositif sur lequel la première instance s'exécute.

7. Procédé selon l'une quelconque des revendications précédentes, comprenant en outre, en réponse à la réception d'une troisième commande de commutation, reconfigurer le redirecteur (170) pour transférer tous les quatrièmes messages adressés à la première adresse à la première instance et pour transférer tous les cinquièmes messages adressés à la seconde adresse à la deuxième instance (184), dans lequel les quatrièmes messages sont à la suite des premiers, deuxièmes et troisièmes messages, et dans lequel les cinquièmes messages sont à la suite des premiers, deuxièmes, troisièmes et quatrièmes messages.

8. Procédé selon l'une quelconque des revendications 1 à 7, dans lequel la première adresse comprend de multiples ports.

9. Procédé selon l'une quelconque des revendications 1 à 8, comprenant en outre :
reconfigurer le redirecteur (170) pour arrêter de recevoir des messages au niveau de la première adresse en réponse à l'achèvement du test d'intégration de l'application (110) ; et
reconfigurer la première instance (182) du composant pour être en mode réception au niveau de la première adresse en réponse à l'achèvement du test d'intégration de l'application (110).

10. Système (400) comprenant :
une mémoire (420) ; et
un processeur (410) en communication avec la mémoire (420), la mémoire (420) comprenant du code informatique qui, lors de son exécution avec le processeur (410), amène le système (400) à réaliser le procédé selon l'une quelconque des revendications 1 à 8.

11. Support lisible par machine incluant des instructions qui, lors de leur exécution par un système de traitement de données (400), amènent le système de traitement de données (400) à réaliser le procédé selon l'une quelconque des revendications 1 à 8.
